Europäisches Patentamt

European Patent Office

Office européen des brevets

(11) Publication number: **0 283 227**
**A2**

(12) **EUROPEAN PATENT APPLICATION**

(21) Application number: 88302197.4

(51) Int. Cl.⁴: **G02B 6/10**

(22) Date of filing: 14.03.88

(30) Priority: 17.03.87 JP 61939/87

(43) Date of publication of application:
21.09.88 Bulletin 88/38

(84). Designated Contracting States:
DE FR GB

(71) Applicant: SEIKO INSTRUMENTS INC.
31-1, Kameido 6-chome Koto-ku
Tokyo 136(JP)

(72) Inventor: Takemura, Yasuhiro
31-1, Kameido 6-chome
Koto-ku Tokyo(JP)
Inventor: Takesue, Toshiharu
31-1, Kameido 6-chome
Koto-ku Tokyo(JP)

(74) Representative: Miller, Joseph et al
J. MILLER & CO. Lincoln House 296-302 High
Holborn
London WC1V 7JH(GB)

(54) Optical isolator.

(57) An optical isolator comprising in combination a polarizer or a polarizing beam splitter (6) and a one-quarter wave retarder (7) characterised in that said polarizer or polarizing beam splitter (6) and said one-quarter wave retarder (7) are constituted by optical fibre members.

## Fig. 1

## "OPTICAL ISOLATOR"

The present invention relates to an optical isolator, e.g. to isolate a light source from other optical systems in communication and measurement apparatus.

Optical apparatus is known comprising in combination a light source, a collimator lens, a polarizer which produces linearly polarized light, and a one-quarter wave retarder which produces circularly polarized light. When the circularly polarized light is reflected back through the one-quarter wave retarder towards the light source, the reflected light, after having passed through the one-quarter wave retarder, becomes linearly polarized light and cannot pass back through the polarizer and consequently does not reach the collimator lens or the light source.

In the known optical apparatus, however, it is necessary to incorporate the said collimator lens and this makes it difficult to reduce the size of the apparatus. Moreover, the optical axes of the various parts of the apparatus need to be in perfect alignment and this is both difficult to achieve and difficult to maintain.

According, therefore, to the present invention, there is provided an optical isolator comprising in combination a polarizer or a polarizing beam splitter and a one-quarter wave retarder characterised in that said polarizer or polarizing beam splitter and said one-quarter wave retarder are constituted by optical fibre members.

The said polarizer or polarizing beam splitter and the said one-quarter wave retarder preferably comprise single-mode fibre couplers.

Preferably, said polarizer or polarizing beam splitter is connected to said one-quarter wave retarder through a fibre-optic connector.

Alternatively, the arrangement may be that said polarizer or polarizing beam splitter is connected to said one-quarter wave retarder by fusion.

The optical isolator is preferably optically coupled to a light source. For example, the light source may be optically coupled to the polarizer or polarizing beam splitter by way of a coupling lens.

The invention is illustrated, merely by way of example, in the accompanying drawings, in which:-

Figure 1 illustrates an embodiment of an optical isolator according to the present invention, and

Figure 2 shows a known optical isolator.

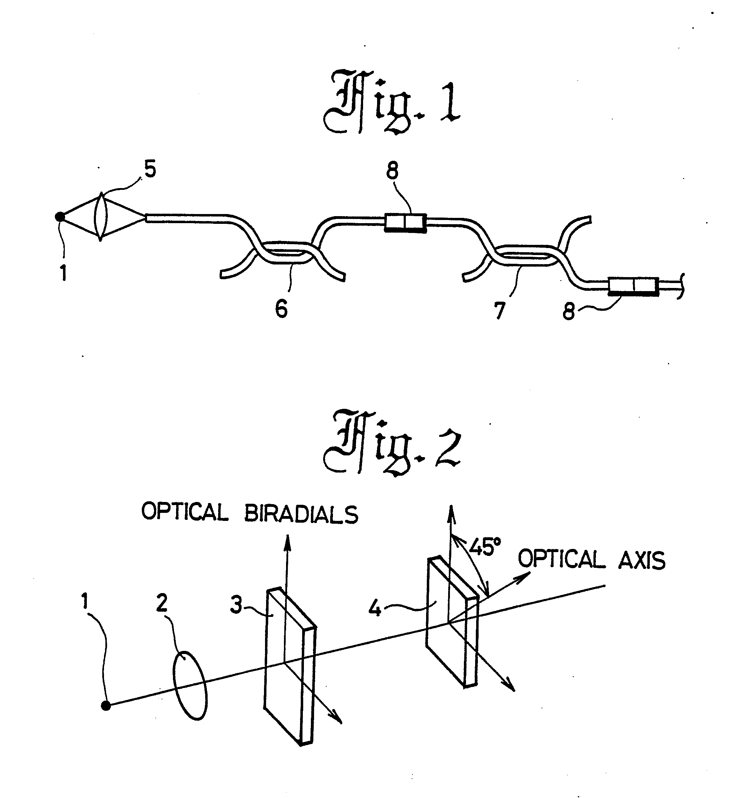

A known optical isolator comprises, as shown in Figure 2, a bulk polarizer 3 and a one-quarter wave retarder 4 with its optical axis rotated at an angle of 45° with respect to the biradial axis of the bulk polarizer 3. The operation of this known optical isolator is hereunder briefly described. Emergent light flux from a light source 1 is collimated into a parallel beam by a collimator lens 2. The collimated beam goes through the polarizer 3 and becomes linearly polarized light along the biradial axis of the polarizer 3. The linearly polarized light then goes through the one-quarter wave retarder 4 which has its optical axis rotated at an angle of 45° with respect to the said biradial axis and becomes circularly polarized light. Even when a part of this circularly polarized light is reflected at a downstream optical system (not shown) and returns toward the light source 1 after having passed through the one-quarter wave retarder 4, the reflected light becomes linearly polarized light having its biradial axis rotated at an angle of 90° with respect to the biradial axis of the original polarized light. Since the biradial axis of the reflected light is rotated at an angle of 90° with respect to the biradial axis of the polarizer 3, the reflected light cannot pass through the polarizer 3, and does not reach the collimator lens 2 nor the light source 1.

When a laser (not shown) is used as a light source and the light is reflected at a downstream optical system (not shown) and returns to the light source, the reflected light enters the laser thereby causing an unstable oscillation mode and affecting the intensity and spectrum of the emergent light. Consequently it is important to provide an optical isolator. However, in the known isolator which uses bulk type elements, the properties of a polarizing beam splitter, which is often used as the polarizer, and of the one-quarter wave retarder are incident light-dependent. Therefore, in order to obtain good isolation, the light must always be collimated before it enters into the polarizing beam splitter and the one-quarter wave retarder. However, this makes it difficult to make the optical system smaller. Moreover, since the optical axes of the incident light beam, the polarizing beam splitter and the one-quarter wave retarder must be exactly aligned, the adjustment of the optical axes becomes critical and external conditions make it difficult to maintain such alignment.

It is therefore desirable to provide an optical isolator which can be made smaller than hitherto, whose optical axis can be easily adjusted, and which can be made stable against external disturbances.

Figure 1 therefore shows one embodiment of an optical isolator according to the present invention which comprises a polarizer or polarizing beam splitter formed by a single-mode fibre coupler 6 and a one-quarter wave retarder 7 which is also formed by a single-mode fibre coupler.

Light from a light source 1 is projected by a coupling lens 5 into a port of the single-mode fibre coupler 6. The single mode fibre coupler 6 functions as a polarizer or a polarizing beam splitter depending upon the location of the coupling region of the single fibres coupler 6 and the direction of polarization of the incident light. Therefore, the propagation mode which propagates from the output port of the coupler 6 through a fibre-optic connector 8 to an input port of a single-mode fibre coupler 7 is transformed into a mode having only one direction of oscillation.

The single-mode fibre coupler 7 functions as a one-quarter wave retarder depending upon the location of the coupled region thereof and the direction of the oscillation of the propagation mode. The propagation mode of this light is the resultant of one mode along the optical axis of the single-mode fibre coupler 7 (one-quarter wave retarder) and another mode orthogonal to the said one mode. There is a one-quarter phase difference between these two modes when the light is transmitted through the single-mode fibre coupler 7 (one-quarter wave retarder). As a result, the resultant mode propagates within the fibre with its oscillation plane circularly rotating. This light propagates from the single-mode fibre coupler 7 (one quarter wave retarder) through fibre-optic connectors or fused connection regions 8 to propagation systems (not shown) or to optical systems (not shown) downstream. When this light is reflected at the propagation systems or the optical systems and returns, the mode which has been propagating with its oscillation plane rotating is given a one-quarter phase difference between its two resolved modes, after the mode passes through the single-mode fibre coupler 7 (one quarter wave retarder) again, in the same way as occurs in the course of the outgoing travel of the light, and becomes a mode whose resultant mode is orthogonal to the biradial axis of the single-mode fibre coupler 6 (fibre optic polariser). Accordingly, this mode cannot propagate from the single-mode fibre coupler 6 (fibre-optic polarizer) to the light source side, thereby effecting the function of an optical isolator.

A single mode fibre coupler which is used as a fibre-optic polarizing beam splitter and which is fabricated from two single mode fibres by the fused taper method is described in "Electronics Letters Vol. 21 No. 6 P249-P251". Another type of beam splitter which is fabricated from polarization-maintaining fibre by the fused taper method has also been reported.

Several fibre-optic polarizers have also been reported. One of them is formed with an elliptic cladding type polarization-maintaining fibre coiled in a loop, and another one is, for example, formed from a single-mode fibre coupler. With regard to one-quarter wave retarders, it has been reported that a single-mode fibre coupler can function as a one-quarter wave retarder (OFS '86 P351-P354).

As described above, since the optical isolator shown in Figure 1 does not require a collimator, the device can be made small. Further, the adjustment of the optical axes of the parts of the isolator can be easily effected because the isolator can be coupled by fibre-optic connectors or through the use of fusion. Moreover, it is possible to obtain an excellent isolator which is stable against external disturbance. When a direct coupling between a light source and an optical fibre becomes possible in the future, it will be possible to provide a light transmission system without using any bulk elements, thereby contributing to further miniaturization, easier assembly and improved reliability.

## Claims

1. An optical isolator comprising in combination a polarizer or a polarizing beam splitter (6) and a one-quarter wave retarder (7) characterised in that said polarizer or polarizing beam splitter (6) and said one-quarter wave retarder (7) are constituted by optical fibre members.

2. An optical isolator according to claim 1 characterised in that said polarizer or polarizing beam splitter (6) and said one-quarter wave retarder (7) comprise single-mode fibre couplers.

3. An optical isolator according to claim 1 or 2 characterised in that said polarizer or polarizing beam splitter (6) is connected to said one-quarter wave retarder (7) through a fibre-optic connector (8).

4. An optical isolator according to claim 1 or 2 characterised in that said polarizer or polarizing beam splitter (6) is connected to said one-quarter wave retarder (7) by fusion.

5. An optical isolator according to any preceding claim characterised in that the optical isolator is optically coupled to a light source (1).

6. An optical isolator according to claim 5 in which the light source (1) is optically coupled to the polarizing beam splitter (6) by way of a coupling lens (5).

# Fig. 1

5

8

1

6

7

8

# Fig. 2

OPTICAL BIRADIALS

45°   OPTICAL AXIS

1    2    3    4